# EUROPEAN PATENT APPLICATION

(11) **EP 1 850 564 A1**
(43) Date of publication of application: **31.10.2007**
(21) Application number: 06712568.2
(22) Date of filing: 30.01.2006
(51) Int. Cl.: H04M 1/00, H04B 5/02, H04B 7/26, H04Q 7/38

(54) **PORTABLE TERMINAL DEVICE**

(30) Priority: 16.02.2005 JP 2005038830
(71) Applicant: MATSUSHITA ELECTRIC INDUSTRIAL CO., LTD., Osaka 571-8501 (JP)
(72) Inventor: MATSUURA, Iwao, Matsushita Electric Industrial Co.,Ltd., Osaka-shi, Osaka 540-6319 (JP)
(74) Representative: Pautex Schneider, Nicole Véronique
(86) International application number: PCT/JP2006/301425
(87) International publication number: WO 2006/087896

(57) **Abstract**

Noncontact IC (101) communicates information to a read write unit that is an external terminal device. High frequency modulating/demodulating section (102) demodulates data that has been modulated by the read write unit using a load modulating method or the like. Loop antenna (103) receives the data from the read write unit. Battery (107) supplies power to noncontact IC (101) and control section (108). Control section (108) controls a portable phone function, and varies the battery voltage threshold value for issuing a low voltage alarm or the battery voltage threshold value for stopping power supply to the portable phone function, in a usage pattern where communication by noncontact IC (101) is performed twice or more.

## Description

### TECHNICAL FIELD

The present invention relates to a portable terminal device, and more particularly to a portable terminal device having a noncontact IC function.

### BACKGROUND ART

Recently, a portable terminal device having a noncontact Integrated Circuit (IC) function is proposed, and is disclosed in Japanese Patent Unexamined Publication No.2001-223631, for example. The portable terminal device employs a noncontact IC to facilitate payment of a fare of an electric train or payment for purchase at a convenience store without delivery of cash.

There are two types of noncontact IC systems having a noncontact IC function. One type is called a proximity type, and has a carrier wave frequency of 13.56 MHz used at a communication distance of tens to about 70 cm. The other type is called a close type, and has a carrier wave frequency of 4.91 MHz used at a communication distance of several mm or shorter. These types are disclosed in Japanese Patent Unexamined Publication No.2003-6592, for example.

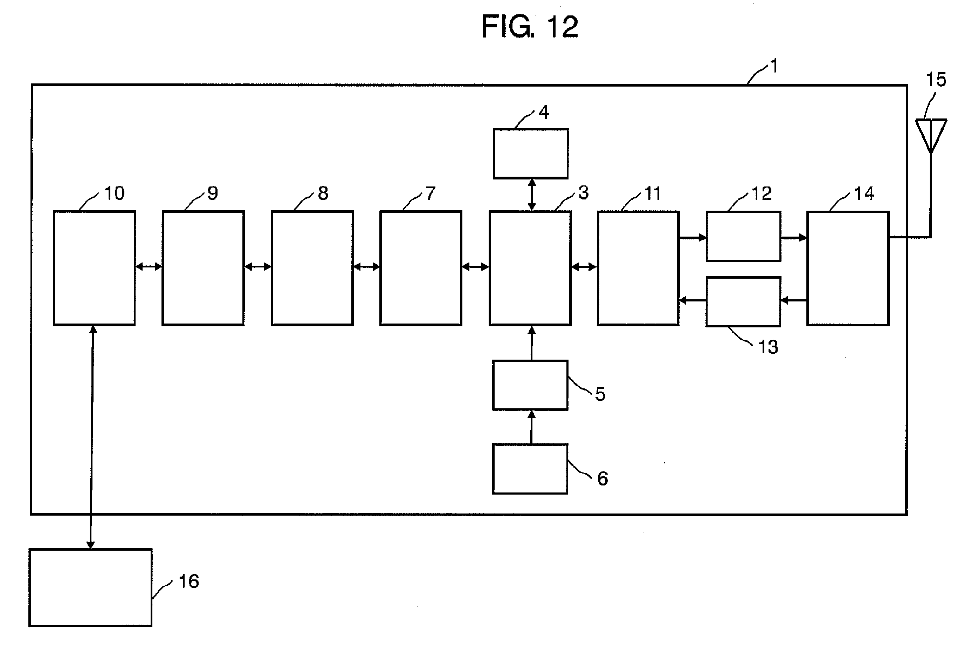

Fig. 12 is a block diagram showing a configuration of a portable terminal device having a conventional noncontact IC function. Portable terminal device 1 has control section 3, memory 4, power supply circuit 5, battery 6, noncontact IC 7, modulating/demodulating circuit 8 for noncontact IC system use, high frequency circuit 9 for noncontact IC system use, loop antenna 10 for noncontact IC system use, a base band processing section 11 for portable phone use, transmitting section 12 for portable phone use, receiving section 13 for portable phone use, antenna sharing section 14 for portable phone use, and antenna 15 for portable phone use.

Balance information, coming in/out information, and the like are recorded in memory 4, and are communicated between memory 4 and read write unit 16 installed at a ticket gate of a station, for example. The information stored in memory 4 is transmitted via loop antenna 10 for noncontact IC system use. Read write unit 16, on receiving a signal, transmits a signal (ACK) for reporting success of reception. The signal from read write unit 16 is received by loop antenna 10 for noncontact IC system use, passes through high frequency circuit 9 for noncontact IC system use, and is demodulated by modulating/demodulating circuit 8 for noncontact IC system use. A power supply used for the noncontact IC function of portable terminal device 1 is shared with a portable phone function, and the power is supplied from power supply circuit 5 to each circuit.

However, the conventional portable terminal device has the following problems.

### (1) Operable voltage

A power supply is shared between the portable phone function and the noncontact IC function, as discussed above. When the battery voltage becomes a predetermined value or less, a Low Voltage Alarm (LVA) is issued, or power supply to the portable phone function is stopped. The predetermined value is determined as a determination threshold value of the battery residual quantity regardless of the usage pattern of the noncontact IC. Therefore, even at a battery voltage at which the portable phone function cannot be used but the noncontact IC function can be used, the noncontact IC function cannot be used.

### (2) Use status of noncontact IC

Since the power supply is shared between the portable phone function and the noncontact IC function, the power supply for the noncontact IC function is turned off simultaneously with turn off of the power supply for the portable phone function. Therefore, in a usage pattern where the noncontact IC is used twice or more, the power supply can turn off due to reduction in voltage and the noncontact IC cannot be necessarily used twice or later. In a usage pattern where a user uses the noncontact IC in coming into or coming out of a station or a premise, for example, if the power supply turns off after coming into the station or the premise, the noncontact IC cannot be used and the user cannot go out of the station or the premise, disadvantageously.

### (3) Operability display of noncontact IC function

There is only a display indicating an operable state of the portable phone function, and there is no display indicating an operable state of the noncontact IC function. Therefore, a user can feel insecure.

### SUMMARY OF THE INVENTION

The present invention addresses these problems, and provides portable terminal devices as follows.
(1) A portable terminal device allowing extension of operable time of a noncontact IC
(2) A portable terminal device allowing a noncontact IC to operate without sufficient power supply from a battery
(3) A portable terminal device that can display an operable state of a noncontact IC and makes a user feel secure

A portable terminal device of the present invention has a noncontact IC. This portable terminal device includes a control section for controlling a portable phone function, and a battery for supplying power to the noncontact IC and the control section. The control section varies the battery voltage threshold value for issuing a low voltage alarm or the battery voltage threshold value for stopping the power supply to the portable phone function, in response to the usage pattern of the noncontact IC.

This configuration can extend the available time of the noncontact IC after stopping the power supply to the portable phone function.

Another portable terminal device of the present invention has a loop antenna and a noncontact IC. This portable terminal device includes a control section for controlling a portable phone function, a battery for supplying power to the noncontact IC and the control section, a direct-current converting section for converting the alternating current received by the loop antenna into direct current and supplying power, and a power supply selecting section for selecting power supply from the direct-current converting section or power supply from the battery and for supplying power to the noncontact IC.

Thanks to this configuration, the noncontact IC can be operated even when the battery residual quantity becomes small, by supplying the power generated by direct-current conversion to the noncontact IC.

Yet another portable terminal device of the present invention has a loop antenna and a noncontact IC. This portable terminal device includes a control section for controlling a portable phone function, a noncontact IC dedicated battery for supplying power to the noncontact IC, a battery for supplying power to the control section, a direct-current converting section for converting the alternating current received by the loop antenna into direct current and supplying power, and a power supply selecting section for selecting power supply from the direct-current converting section or power supply from the noncontact IC dedicated battery and for supplying power to the noncontact IC.

Thanks to this configuration, the power generated by the direct-current conversion can be supplied to the noncontact IC, and the noncontact IC can be operated even when the battery residual quantity of the noncontact IC dedicated battery becomes small.

The portable terminal devices allow extension of the available time of the noncontact IC and allow visual recognition of the estimated available time.

### BRIEF DESCRIPTION OF DRAWINGS

Fig. 1 is a block diagram showing a configuration of a portable terminal device in accordance with exemplary embodiment 1 of the present invention.
Fig. 2 is a flowchart showing an operation of the portable terminal device in accordance with exemplary embodiment 1.
Fig. 3 is a diagram showing a relation between a lapse of time and battery voltage of the portable terminal device in accordance with exemplary embodiment 1.
Fig. 4A is a diagram showing a main display section of the portable terminal device in accordance with exemplary embodiment 1.
Fig. 4B is a diagram showing a sub display section of the portable terminal device in accordance with exemplary embodiment 1.
Fig. 5 is a flowchart showing an operation of a portable terminal device in accordance with exemplary embodiment 2 of the present invention.
Fig. 6 is a diagram showing low power consumption mode of the portable terminal device in accordance with exemplary embodiment 2.
Fig. 7 is a flowchart showing another operation of the portable terminal device in accordance with exemplary embodiment 2.
Fig. 8 is a block diagram showing a configuration of a portable terminal device in accordance with exemplary embodiment 3 of the present invention.
Fig. 9 is a flowchart showing an operation of the portable terminal device in accordance with exemplary embodiment 3.
Fig. 10 is a block diagram showing a configuration of a portable terminal device in accordance with exemplary embodiment 4 of the present invention.
Fig. 11 is a flowchart showing an operation of the portable terminal device in accordance with exemplary embodiment 4.
Fig. 12 is a block diagram showing a configuration of a portable terminal device having a conventional noncontact IC function.

### REFERENCE MARKS IN THE DRAWINGS

- 101: noncontact IC
- 102: high frequency modulating/demodulating section
- 103: loop antenna
- 107: battery
- 108: control section
- 110: main display section
- 111: radio communication control section
- 112: transmitting/receiving section
- 113: antenna
- 120: radio communication section
- 130: camera
- 140: sub display section

### DETAILED DESCRIPTION OF PREFERRED EMBODIMENTS

### (FIRST EXEMPLARY EMBODIMENT)

A portable terminal device of exemplary embodiment 1 will be described hereinafter with reference to the accompanying drawings. In exemplary embodiment 1, the operable time of the noncontact IC is extended, by varying a predetermined voltage for putting the portable terminal device into an LVA state and a predetermined voltage for stopping power supply to the portable phone function. Here, the former voltage is hereinafter referred to as "power supply OFF voltage threshold value", and the latter voltage is hereinafter referred to as "LVA threshold value".

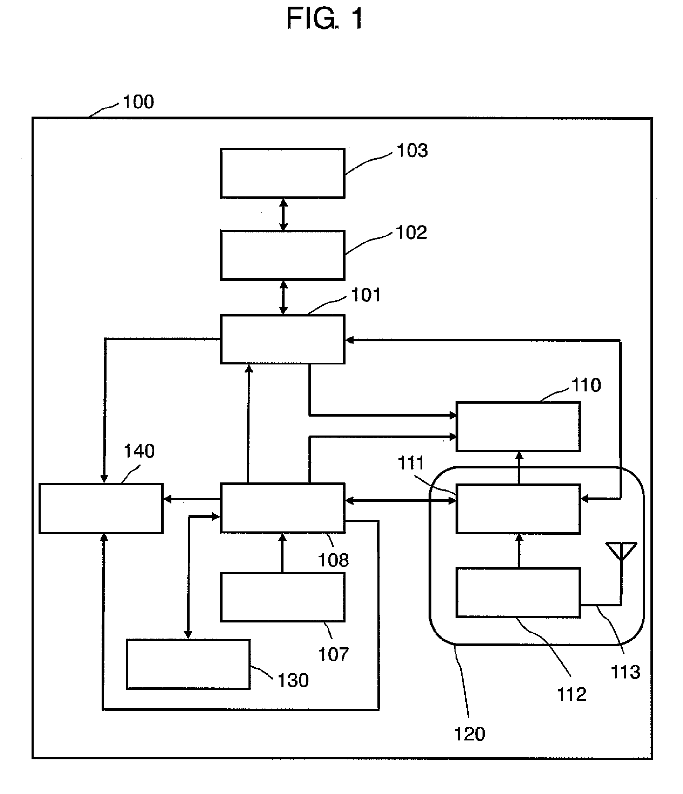

Fig. 1 is a block diagram showing a configuration of a portable terminal device in accordance with exemplary embodiment 1. Portable terminal device 100 of exemplary embodiment 1 has noncontact IC 101, high frequency modulating/demodulating section 102, loop antenna 103, battery 107, control section 108, main display section 110, sub display section 140, radio communication section 120, and camera 130. Radio communication section 120 has radio communication control section 111, transmitting/receiving section 112, and antenna 113.

Loop antenna 103 receives a radio signal from a read write unit (not shown), which is an external terminal device, and transmits a radio signal to the read write unit. High frequency modulating/demodulating section 102 receives, through loop antenna 103, a signal modulated by the read write unit using a method of load modulation or the like, demodulates the received signal, and delivers, to loop antenna 103, a signal acquired by modulating data using a method of load modulation or the like. Noncontact IC 101 communicates the data modulated or demodulated by high frequency modulating/demodulating section 102 to the read write unit via loop antenna 103. Battery 107 is a Li-ion battery or a nickel-metal-hydride battery. Main display section 110 is a display device such as a Liquid Crystal Display (LCD), and displays a battery residual quantity or the like. Sub display section 140 is a display device such as an LCD, and also displays a battery residual quantity or the like. Control section 108 includes a central processing unit (CPU) or the like. Control section 108 controls the portable phone function, and varies the LVA threshold value and the power supply OFF voltage threshold value in a usage pattern where communication using the noncontact IC is performed twice or more. Here, an example of this usage pattern is coming into and coming out of a station, or coming into and coming out of a certain region through a gate.

Radio communication control section 111 performs control for communication by a communication method such as Wideband Code Division Multiple Access (W-CDMA). Transmitting/receiving section 112 modulates data to be transmitted, and transmits the modulated data via antenna 113. Transmitting/receiving section 112 demodulates the data received via antenna 113, and outputs the demodulated data to radio communication control section 111. Camera 130 photographs an image through a lens, and outputs the photographed image as image data to control section 108.

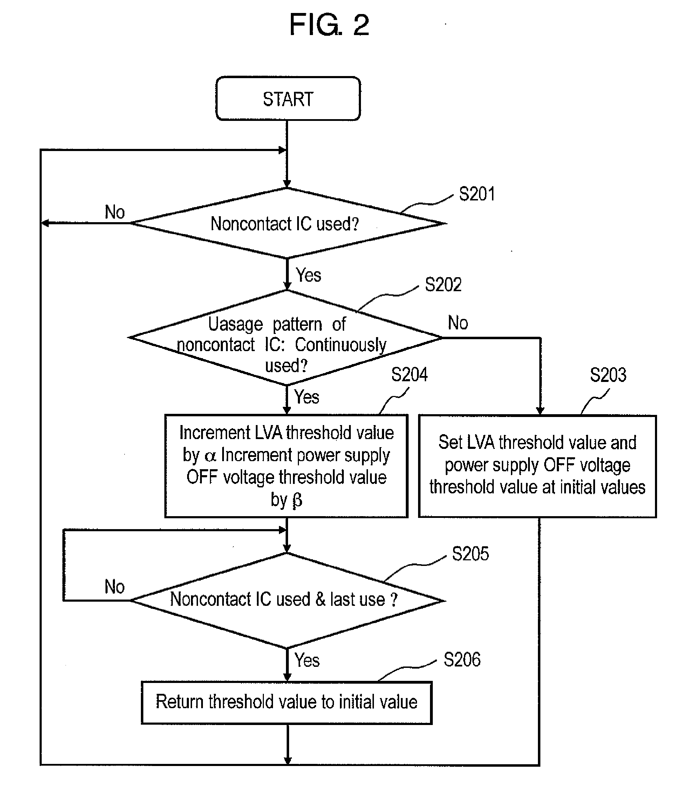

Fig. 2 is a flowchart showing an operation of the portable terminal device in accordance with exemplary embodiment 1. First, when the noncontact IC is used in step S201, namely communication with the read write unit is started, it is determined whether the usage pattern of the noncontact IC is single use or continuous use in step S202.

The process goes to step S203 when the usage pattern of the noncontact IC is single use, or goes to step S204 when the usage pattern is continuous use. Here, the single use means that the noncontact IC is used only once, for example, in payment for purchase of an article at a convenience store. The continuous use means that the noncontact IC needs to be used twice or more, for example, in a case where the use of the noncontact IC is started by processing for coming into a station and is completed by subsequent processing for coming out of the station.

In step S203, the LVA threshold value is set at initial value (V4), and the power supply OFF voltage threshold value is set at initial value (V3), and the process returns to step S201.

In step S204, the LVA threshold value is set at the value (V4+α) obtained by adding predetermined value (α) to the initial value, and the power supply OFF voltage threshold value is set at the value (V3+β) obtained by adding predetermined value (β) to the initial value. Then, it is determined whether or not the last use is performed in step S205. Here, the last use means a use for completing the continuous use state, for example, in the processing for coming out of the station after coming into it. After the last use, the LVA threshold value and the power supply OFF voltage threshold value are returned to the initial values in step S206. The process then returns to step S201.

When the usage pattern of the noncontact IC is continuous use, the LVA threshold value and the power supply OFF voltage threshold value are set higher than respective initial values in the above-mentioned operation. In other words, the time elapsing before the LVA state and the time elapsing before the power supply to the portable phone function is turned off are reduced. As a result, more battery residual quantity remains in the continuous use case than in the single use case when the power supply to the portable phone function is turned off. The noncontact IC can be therefore used for a longer time and power to be supplied to the noncontact IC for next use can be left sufficiently. When the usage pattern of the noncontact IC is single use, the LVA threshold value and the power supply OFF voltage threshold value are set at respective initial values without addition, and hence the operations of the LVA and turn off of the power supply to the portable phone function are not changed.

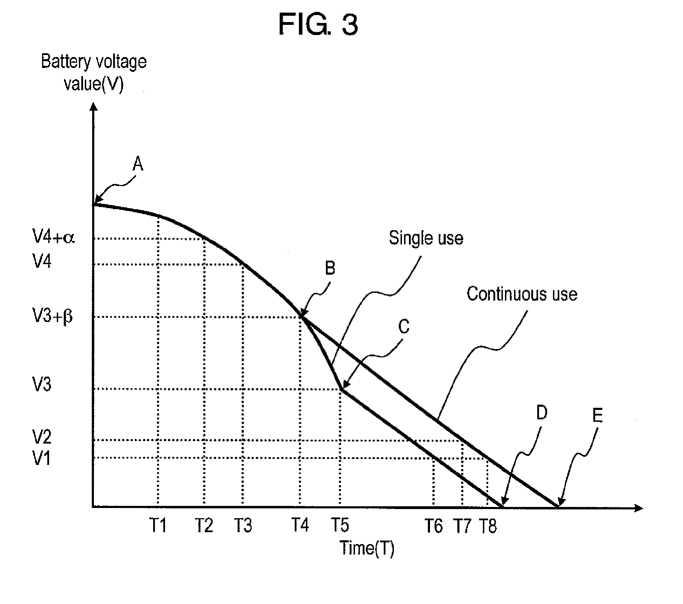

Fig. 3 is a diagram showing a relation between a lapse of time and battery voltage of the portable terminal device in accordance with exemplary embodiment 1. The relation between the usage pattern of the noncontact IC and the LVA threshold value or the power supply OFF voltage threshold value is described with reference to Fig. 3. The horizontal axis shows time T, and the vertical axis shows battery voltage V. The LVA threshold value is set at initial value (V4), and the power supply OFF voltage threshold value is set at initial value (V3). Curve A - B - C - D represents the case where the usage pattern is the single use. Curve A - B - E represents the case where the usage pattern is the continuous use.

First, the case where the usage pattern is determined to be the single use is described. For example, when a user pays for an article at a convenience store using the noncontact IC at time T1, the usage pattern is determined to be the single use, the LVA threshold value remains at initial value (V4), and the power supply OFF voltage threshold value remains at initial value (V3). At time T3, the battery voltage decreases to LVA threshold value (V4), and an alarm about small battery residual quantity is issued. At time T5, the battery voltage decreases to power supply OFF voltage threshold value (V3), and portable phone function is turned off. Then, the noncontact IC can be used from time T5 to time T6 when the battery voltage becomes V1.

Next, the case where the usage pattern is determined to be the continuous use is described. For example, when a user comes into a station at time T1, the portable terminal device receives a signal from a read write unit installed in the station, the usage pattern is determined to be the continuous use, the LVA threshold value is set at the value (V4+α) obtained by adding predetermined value (α) to initial value (V4), and the power supply OFF voltage threshold value is set at the value (V3+β) obtained by adding predetermined value (β) to the initial value (V3). When the battery voltage becomes V4+α at time T2, an alarm about small battery residual quantity is issued to the user. When the battery voltage decreases to V3+β at time T4, control section 108 turns off the portable phone function. After time T4, only the noncontact IC can be used.

When the user arrives at a target station and comes out of it at time T7, the battery voltage is V2 larger than V1 at which the noncontact IC is disabled, so that the noncontact IC can be still used. At time T8, the battery voltage decreases to V1, and the noncontact IC is also disabled. In other words, the noncontact IC can be used for a longer time until time T8 in the continuous use case, comparing with the single use case where it can be used only until time T6.

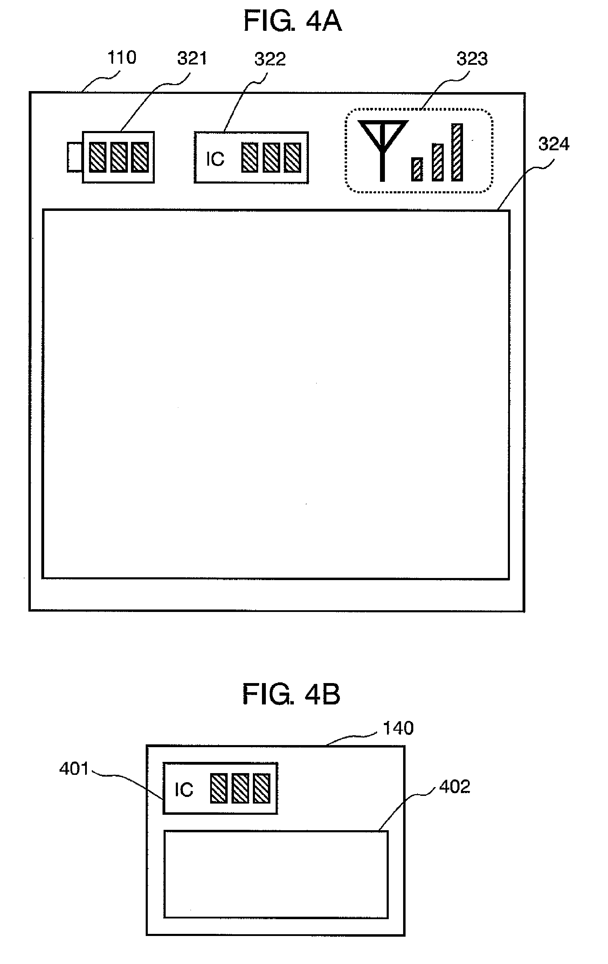

Fig. 4A is a diagram showing a main display section of the portable terminal device in accordance with exemplary embodiment 1. Main display section 110 has battery residual quantity display section 321, noncontact-IC battery residual quantity display section 322, receiving state display section 323, and information display section 324. Battery residual quantity display section 321 indicates the battery residual quantity used for the portable phone function (including a camera function or the like). Noncontact-IC battery residual quantity display section 322 indicates the battery residual quantity used for the noncontact IC function. Receiving state display section 323 indicates electric field strength due to radio wave from a base station. Information display section 324 displays the phone number of the other side of an incoming call, the address book, or an image photographed by the camera in response to a request from the user.

Fig. 4B is a diagram showing a sub display section of the portable terminal device in accordance with exemplary embodiment 1. Sub display section 140 has noncontact-IC battery residual quantity display section 401, and information display section 402. Noncontact-IC battery residual quantity display section 401 displays the battery residual quantity used for the noncontact IC function, similarly to that of main display section 110. Thus, even when the portable terminal device is in a state where main display section 110 cannot be seen, the user can recognize the battery residual quantity because the noncontact-IC battery residual quantity is displayed on sub display section 140.

As discussed above, the using time of the noncontact IC function after turning off power supply to the portable phone function can be extended in embodiment 1.

In embodiment 1, an estimated available time of the noncontact IC is displayed, so that the user can visually recognize the estimated available time. Since two display sections are disposed, even when the user cannot see the main display section, the user can recognize the estimated available time of the noncontact IC on the sub display section, and the user can feel secure.

### (SECOND EXEMPLARY EMBODIMENT)

Exemplary embodiment 2 will be described hereinafter. A portable terminal device of exemplary embodiment 2 determines whether or not to set low power consumption mode in response to the usage pattern or the like of a noncontact IC. A basic configuration of the portable terminal device of exemplary embodiment 2 is the same as that of exemplary embodiment 1, so that description of the block diagram of embodiment 2 is omitted.

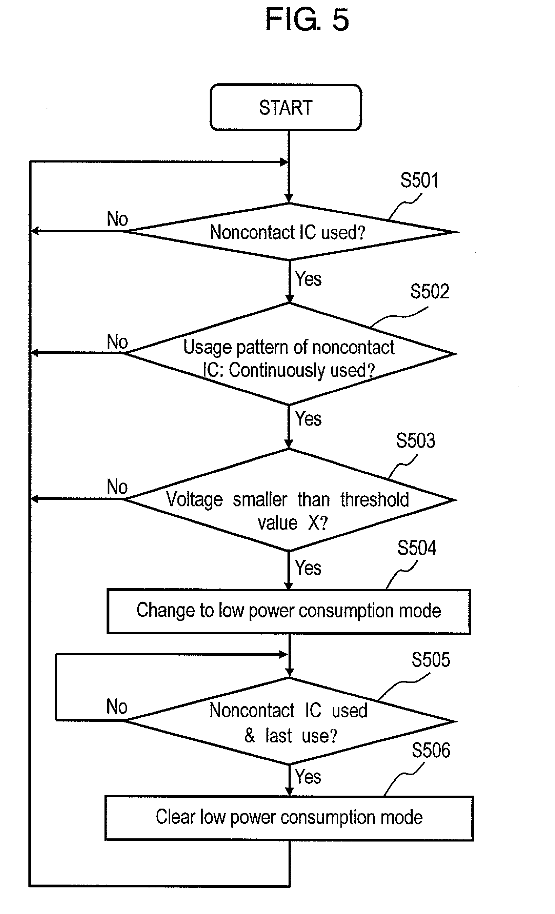

Fig. 5 is a flowchart showing an operation of the portable terminal device of exemplary embodiment 2. In exemplary embodiment 2, definition of single use, continuous use, and last use is the same as that of exemplary embodiment 1.

First, it is determined whether or not the noncontact IC has been used in step S501. When the noncontact IC has been used, the usage pattern of the noncontact IC is determined in step S502. When the usage pattern of the noncontact IC is single use, the process returns to step S501. When the usage pattern is continuous use, it is determined whether or not the power supply voltage of the portable terminal device is lower than predetermined threshold value X (V) in step S503. When the power supply voltage is lower than threshold value X (V), the portable terminal device is set at low power consumption mode in step S504. When the power supply voltage exceeds threshold value X (V), the process returns to step S501 without putting the portable terminal device into the low power consumption mode. The low power consumption mode in step S504 is continued until the last use in step S505. When the last use is completed, the low power consumption mode is cleared in step S506, and the process returns to step S501.

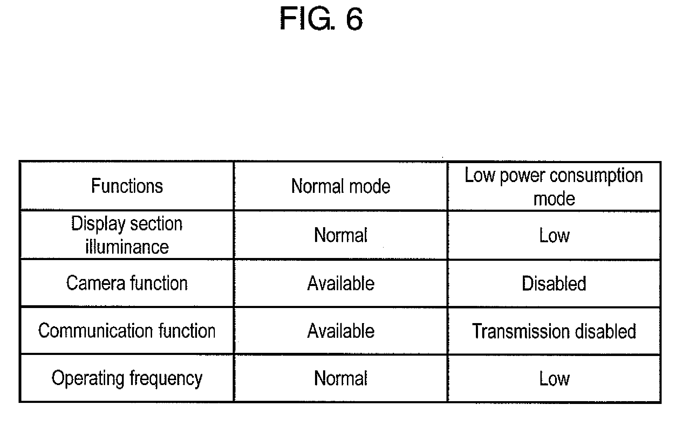

Fig. 6 is a diagram showing the low power consumption mode of the portable terminal device in accordance with exemplary embodiment 2. The low power consumption mode is specifically described with reference to Fig. 6. The low power consumption mode is used for minimizing the power consumption of the portable terminal device and extending the available time. The display section is controlled so that the illuminance thereof is set lower in the low power consumption mode than in normal mode or the display section itself is turned off. The camera function is controlled so that the camera function can be used in the normal mode but cannot be used in the low power consumption mode. The communication function is not restricted in the normal mode, but a phone call cannot be made in the low power consumption mode. The operating frequency is set lower in the low power consumption mode than in the normal mode. The restriction in the low power consumption mode is one example. The restriction may be only partially employed, or another restriction may be added. A user may set a restriction on any function. When a call arrives in the low power consumption mode, the low power consumption mode is cleared. However, the present invention is not limited to this.

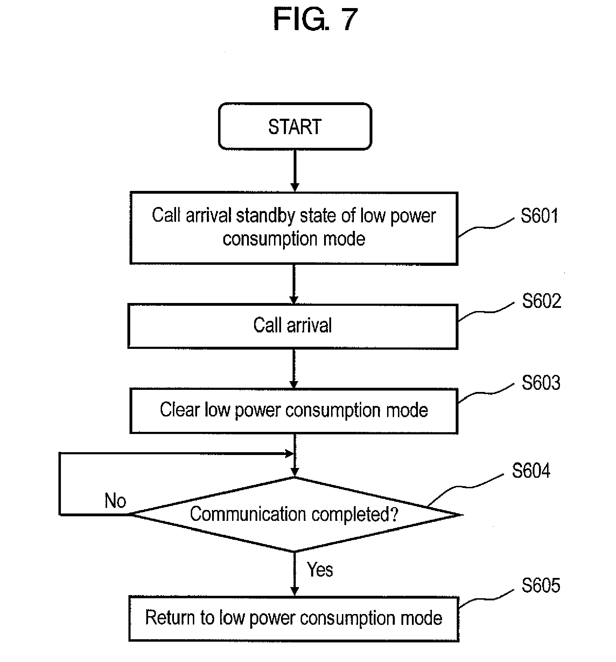

Fig. 7 is a flowchart showing another operation of the portable terminal device in accordance with exemplary embodiment 2. An operation performed when a call arrives in the low power consumption mode is described with reference to Fig. 7. The low power consumption mode and an arrival standby state are set in step S601. When a call arrives in this mode and this state in step S602, the low power consumption mode is cleared in step S603. The completion of the communication is monitored in step S604. When the communication is completed, the low power consumption mode is recovered in step S605. Thanks to these operations, the clearance of the low power consumption mode during talk causes stable talk advantageously.

As discussed above, the portable terminal device of embodiment 2 can extend the available time of the noncontact IC by setting the low power consumption mode, when the power supply voltage thereof becomes a predetermined threshold value or lower in the continuous usage pattern of the noncontact IC.

Since the low power consumption mode is set depending on the usage pattern of the noncontact IC, the power consumption is minimized during continuous use, and hence the duration of the use of the noncontact IC can be extended.

### (THIRD EXEMPLARY EMBODIMENT)

A portable terminal device of exemplary embodiment 3 has a power supply selecting section for noncontact IC use, and can select power supply by a battery or by conversion from the alternating current received by a loop antenna to direct current.

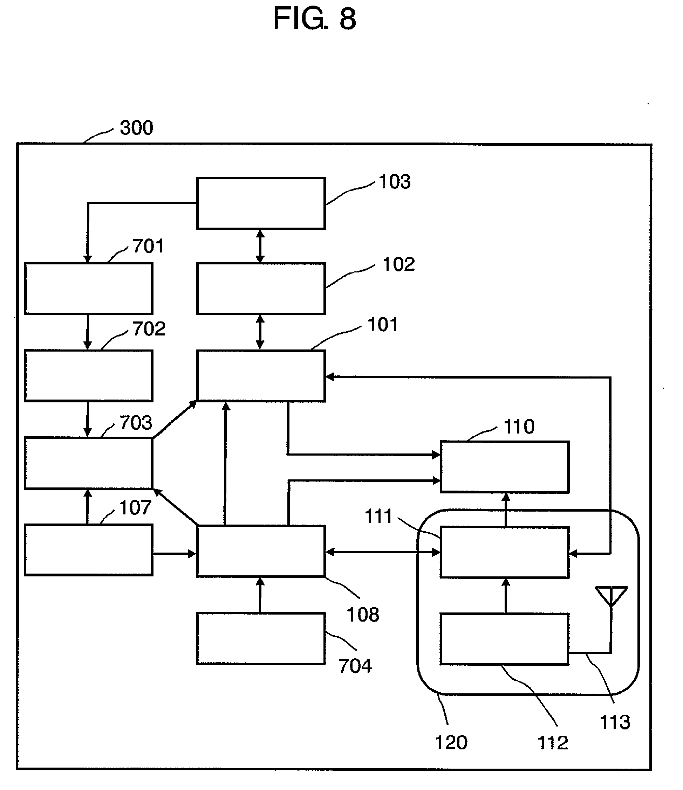

Fig. 8 is a block diagram showing a configuration of a portable terminal device in accordance with exemplary embodiment 3. Portable terminal device 300 has noncontact IC 101, high frequency modulating/demodulating section 102, loop antenna 103, alternating-current detecting section 701, direct-current converting section 702, power supply selecting section 703, input section 704, battery 107, control section 108, display section 110, and radio communication section 120. Radio communication section 120 has radio communication control section 111, transmitting/receiving section 112, and antenna 113. Elements similar to those in portable terminal device 100 of embodiment 1 are denoted with the same reference marks, and the descriptions of those elements are omitted.

Alternating-current detecting section 701 detects the alternating current generated in loop antenna 103. Direct-current converting section 702 converts the detected alternating current into direct current, and extracts the direct current as power supply for driving the control section or the like. Power supply selecting section 703 selects whether power is supplied by battery 107 or by conversion to direct current from the alternating current that is generated by the electric field received by loop antenna 103. Input section 704 receives a user input that indicates whether the power is supplied from direct-current converting section 702 or battery 107, and sends the input result to power supply selecting section 703.

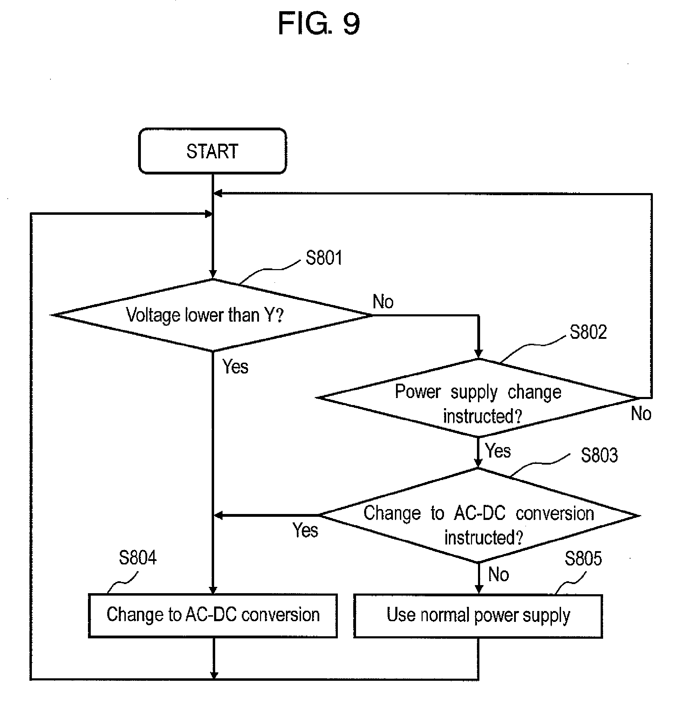

Fig. 9 is a flowchart showing an operation of the portable terminal device in accordance with exemplary embodiment 3. An operation of the power supply selecting section is described with reference to Fig. 9. Here, normal power supply means the power supply from the battery.

First, it is determined whether or not the power supply voltage is lower than threshold value Y (V) in step S801. When the voltage is lower than threshold value Y (V), the power supply is changed to the power supply by conversion from alternating current to direct current in step S804. When the voltage is threshold value Y (V) or higher, it is determined whether or not the user manually instructs power supply change in step S802. When the user instructs the change to the conversion from alternating current to direct current in step S803, the process goes to step S804. When not so in step S803, use of the normal power supply is selected in step S805. When there is no instruction from the user in step S802, the process returns to step S801.

When the battery voltage is lower than threshold value Y (V) in step S801 and then the battery voltage recovers to threshold value Y (V) or higher due to charge or battery replacement, the power supply selecting section may select the power supply method that is input by the user with the input section before the recovery of the battery voltage.

Similarly to the portable terminal device of embodiment 1, the portable terminal device of embodiment 3 may have a portable-phone-function battery display section for indicating an estimated battery residual quantity available to the portable phone function, and a noncontact-IC-function battery display section for indicating an estimated battery residual quantity available to the noncontact IC function.

Since the power generated by direct-current conversion 702 can be supplied to the noncontact IC in embodiment 3 as discussed above, the noncontact IC can be operated even when the battery residual quantity becomes low.

### (FOURTH EXEMPLARY EMBODIMENT)

Exemplary embodiment 4 will be described hereinafter. A portable terminal device of exemplary embodiment 4 is obtained by adding a noncontact IC dedicated battery to portable terminal device 300 of embodiment 3, and can select whether the power is supplied by the noncontact IC dedicated battery or by conversion from alternating current to direct current through a loop antenna.

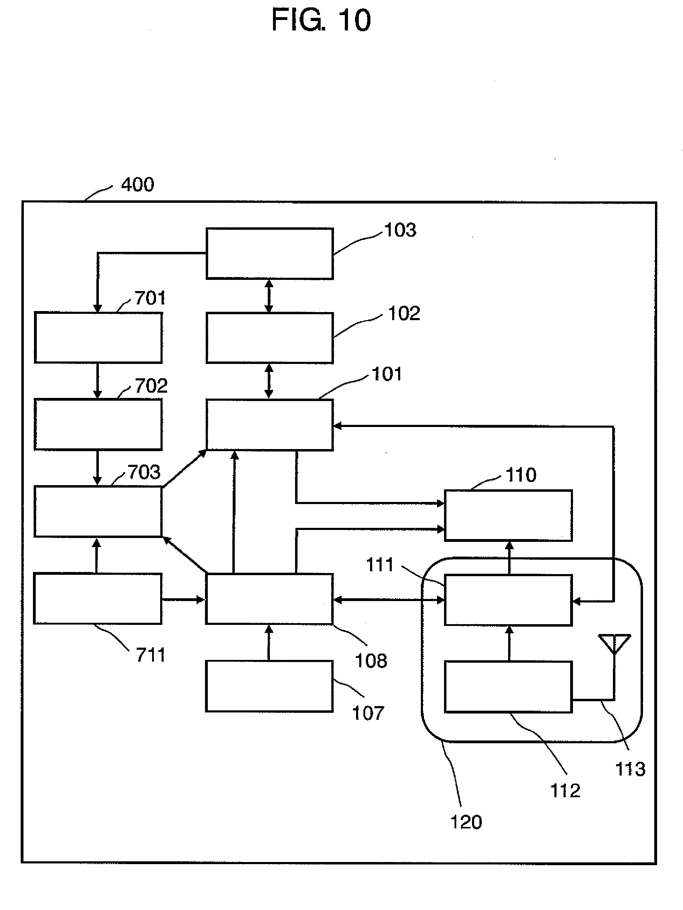

Fig. 10 is a block diagram showing a configuration of a portable terminal device in accordance with exemplary embodiment 4. Portable terminal device 400 has noncontact IC 101, high frequency modulating/demodulating section 102, loop antenna 103, alternating-current detecting section 701, direct-current converting section 702, power supply selecting section 703, noncontact IC dedicated battery 711, battery 107, control section 108, display section 110, and radio communication section 120. Radio communication section 120 has radio communication control section 111, transmitting/receiving section 112, and antenna 113. Elements similar to those in portable terminal device 300 of embodiment 3 are denoted with the same reference marks, and the descriptions of those elements are omitted.

Power supply selecting section 703 selects whether power is supplied by noncontact IC dedicated battery 711 or by conversion to direct current from the alternating current that is generated by the electric field received by loop antenna 103. Battery 107 supplies power to radio communication section 120 through control section 108.

A plurality of display sections may be disposed. When the portable phone function is disabled by reduction in battery voltage of battery 107 or stop of power supply from battery 107, one of the display sections may display the estimated battery residual quantity available to the noncontact IC using power supply from the noncontact IC dedicated battery.

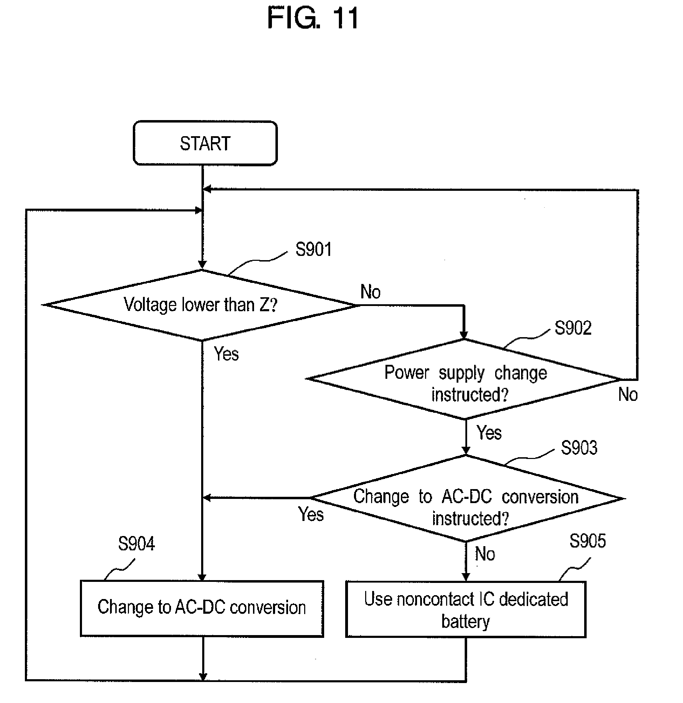

Fig. 11 is a flowchart showing an operation of the portable terminal device in accordance with exemplary embodiment 4. An operation of power supply selecting section 703 is described with reference to the flowchart of Fig. 11. Here, normal power supply means the power supply from the battery.

First, it is determined whether or not the power supply voltage is lower than threshold value Z (V) in step S901. When the voltage is lower than threshold value Z (V), the power supply is changed to the power supply by conversion from alternating current to direct current in step S904. When the voltage is threshold value Z (V) or higher, it is determined whether or not the user manually instructs power supply change in step S902. When the user instructs the change to the conversion from alternating current to direct current in step S903, the process goes to step S904. When not so in step S903, the process goes to step S905. Use of the normal power supply is selected in step S905.

Similarly to the portable terminal device of embodiment 3, the portable terminal device of embodiment 4 may have an input section allowing a user to instruct the power supply selecting section to select whether the power supply to the noncontact IC is performed by the direct-current converting section or by the noncontact IC dedicated battery.

When the battery voltage temporarily becomes lower than threshold value Z (V) and then the battery voltage recovers, the power supply selecting section may select the power supply method that is input by the user with the input section before recovery of the battery voltage.

Similarly to the portable terminal device of embodiment 1, the portable terminal device of embodiment 4 may have a portable-phone-function battery display section for indicating an estimated battery residual quantity available to the portable phone function, and a noncontact-IC-function battery display section for indicating an estimated battery residual quantity available to the noncontact IC function.

Since the power generated by direct-current converting 702 can be supplied to noncontact IC 101 in embodiment 4 as discussed above, noncontact IC 101 can be operated even when the residual quantity of noncontact IC dedicated battery 711 becomes low.

### INDUSTRIAL APPLICABILITY

A portable terminal device of the present invention is useful for a portable terminal employing a noncontact IC, especially for a portable terminal required to operate the noncontact IC for a long time. When a user uses the noncontact IC in coming into and out of a station or a premise, for example, the following portable terminal is required: the power supply of the noncontact IC does not run out before the user comes out after coming in, and the user can certainly use the noncontact IC in coming out. Therefore, the portable terminal device is useful for this portable terminal.

## Claims

1. A portable terminal device including a noncontact IC, the portable terminal device comprising:
a control section for controlling a portable phone function; and
a battery for supplying power to the noncontact IC and the control section,
wherein the control section varies one of a threshold value of a battery voltage for issuing a low voltage alarm and a threshold value of a battery voltage for stopping power supply to the portable phone function in response to a usage pattern of the noncontact IC.

2. The portable terminal device of claim 1, wherein
the control section varies the threshold values after initial communication, in a usage pattern of the noncontact IC where communication is performed twice or more in a pair of actions of coming into and out of a station or coming into and out of a region through a gate.

3. The portable terminal device of claim 1, wherein
the control section changes an operation mode of the portable phone function to a low power consumption mode instead of stopping power supply to the portable phone function, when the threshold values of the battery voltage become a predetermined value or lower.

4. The portable terminal device of claim 3, wherein
the low power consumption mode is a mode where at least one of illuminance reduction or turn off of a display section, use restriction of a camera function, transmission restriction of the portable phone function, and operating frequency reduction is executed.

5. The portable terminal device of claim 3, wherein
the low power consumption mode is a mode where call arrival and communication at a call arrival time can be performed.

6. A portable terminal device including a loop antenna and a noncontact IC, the portable terminal device comprising:
a control section for controlling a portable phone function;
a battery for supplying power to the noncontact IC and the control section;
a direct-current converting section for converting alternating current received by the loop antenna into direct current and supplying power; and
a power supply selecting section for selecting one of power supply from the direct-current converting section and power supply from the battery, and for supplying power to the noncontact IC.

7. The portable terminal device of claim 6, further comprising an input section for receiving selection of whether power is supplied from the direct-current converting section or the battery, the input section sending an input result to the power supply selecting section.

8. The portable terminal device of claim 6, wherein
the power supply selecting section performs selection so as to supply power from the direct-current converting section to the noncontact IC when voltage of the battery decreases or when power supply from the battery stops.

9. The portable terminal device of claim 7, wherein
the power supply selecting section selects a power supply method that is input through the input section before recovery of the battery voltage, when the battery voltage recovers due to one of charge and battery replacement.

10. A portable terminal device including a loop antenna and a noncontact IC, the portable terminal device comprising:
a control section for controlling a portable phone function;
a noncontact IC dedicated battery for supplying power to the noncontact IC;
a battery for supplying power to the control section;
a direct current converting section for converting alternating current received by the loop antenna into direct current; and
a power supply selecting section for selecting one of power supply from the direct-current converting section and power supply from the noncontact IC dedicated battery, and for supplying power to the noncontact IC.

11. The portable terminal device of claim 10, wherein
the power supply selecting section performs selection so as to supply power from the direct-current converting section to the noncontact IC, when voltage of the noncontact IC dedicated battery decreases or when power supply from the noncontact IC dedicated battery stops.

12. The portable terminal device of claim 11, wherein
the power supply selecting section selects a power supply method that is selected by a user before recovery of the voltage of the noncontact IC dedicated battery, when the voltage of the noncontact IC dedicated battery recovers due to one of charge and battery replacement.

13. The portable terminal device of claim 10, further comprising:
a portable-phone-function battery display section for indicating an estimated battery residual quantity available to the portable phone function; and
a noncontact-IC-function battery display section for indicating an estimated battery residual quantity available to the noncontact IC function.

14. The portable terminal device of claim 10, further comprising two or more display sections,
wherein at least one of the display sections displays an estimated battery residual quantity available to the noncontact IC using power supply from the noncontact IC dedicated battery, when the portable phone function is disabled by one of reduction in voltage of the battery and stop of power supply from the battery.

## Amended claims

### Amended claims under Art. 19.1 PCT

**1.** A portable terminal device including a noncontact IC, the portable terminal device comprising:
a control section for controlling a portable phone function; and
a battery for supplying power to the noncontact IC and the control section,
wherein the control section varies one of a threshold value of a battery voltage for issuing a low voltage alarm and a threshold value of a battery voltage for stopping power supply to the portable phone function in response to a usage pattern of the noncontact IC.

**2.** The portable terminal device of claim 1, wherein
the control section varies the threshold values after initial communication, in a usage pattern of the noncontact IC where communication is performed twice or more in a pair of actions of coming into and out of a station or coming into and out of a region through a gate.

**3.** The portable terminal device of claim 1, wherein
the control section changes an operation mode of the portable phone function to a low power consumption mode instead of stopping power supply to the portable phone function, when the threshold value of the battery voltage becomes a predetermined value or lower.

**4.** The portable terminal device of claim 3, wherein
the low power consumption mode is a mode where at least one of illuminance reduction or turn off of a display section, use restriction of a camera function, transmission restriction of the portable phone function, and operating frequency reduction is executed.

**5.** The portable terminal device of claim 3, wherein
the low power consumption mode is a mode where call arrival and communication at a call arrival time can be performed.

**6.** (Deleted)

**7.** (Deleted)

**8.** (Deleted)

**9.** (Deleted)

**10.** (Deleted)

**11.** (Deleted)

**12.** (Deleted)

**13.** (Deleted)

**14.** (Deleted)
